# EUROPÄISCHE PATENTSCHRIFT

(11) **EP 1 991 453 B1**
(45) Veröffentlichungstag und Bekanntmachung des Hinweises auf die Patenterteilung: **06.09.2017**
(21) Anmeldenummer: 07704215.8
(22) Anmeldetag: 30.01.2007
(51) Int. Cl.: B60W 20/00

(54) **VERFAHREN ZUM BETREIBEN EINES HYBRIDFAHRZEUGS UND STEUERGERÄT ZUR DURCHFÜHRUNG DES VERFAHRENS**
METHOD FOR OPERATING A HYBRID VEHICLE, AND CONTROL UNIT FOR CARRYING OUT THE METHOD
PROCEDE DE FONCTIONNEMENT D'UN VEHICULE HYBRIDE ET CONTROLEUR POUR METTRE EN OEUVRE LE PROCEDE

(30) Priorität: 24.02.2006 DE 102006008641
(43) Veröffentlichungstag der Anmeldung: 19.11.2008
(73) Patentinhaber: Robert Bosch GmbH, 70442 Stuttgart (DE)
(72) Erfinder: GLORA, Michael, 71706 Markgroeningen (DE); FALKENSTEIN, Jens-Werner, 73434 Aalen (DE)
(86) Internationale Anmeldenummer: PCT/EP2007/050862
(87) Internationale Veröffentlichungsnummer: WO 2007/099001

(56) Entgegenhaltungen:
- EP-A- 1 743 794
- WO-A-99/62735
- DE-A1- 19 704 153
- US-A1- 2004 259 682

## Beschreibung

### Stand der Technik

Die Erfindung geht aus von einem Verfahren zum Betreiben eines Hybridfahrzeugs nach Anspruch 1 und einem Steuergerät zur Durchführung des Verfahrens nach Anspruch 5.

Im Steuergerät eines Kraftfahrzeugs gibt es einen Algorithmus zur Drehzahlregelung. Wesentliche Aufgabe dieses Reglers ist das Einstellen einer konstanten Leerlaufdrehzahl, die nicht unterschritten werden soll. Bei konventionellen Fahrzeugen mit einem Verbrennungsmotor wird dieser entsprechend angesteuert. Für Hybridfahrzeuge, die zusätzlich zum Verbrennungsmotor noch über weitere Aggregate, insbesondere wenigstens einen Elektromotor, verfügen, kann zum Einstellen der Wunschdrehzahl auch das weitere Aggregat oder die weiteren Aggregate einbezogen werden. Ein solches Verfahren ist beispielsweise bereits in der DE 10 2004 06 012 vorgeschlagen worden.

WO 99/62735 offenbart ein Verfahren und eine Einrichtung zum Steuern einer Kraftmaschine, insbesondere eines Hybridfahrzeugs, die wenigstens zwei Aggregate aufweist, insbesondere eine Brennkraftmaschine und einen Motorgenerator. In dem Verfahren sind Stellsignale für die Brennkraftmaschine und den Motorgenerator abhängig von einem Sollwert eines Drehmoments. Der Sollwert des Drehmoments ist dabei abhängig von einer den Fahrerwunsch repräsentierenden Größe und von Betriebsgrößen der Brennkraftmaschine. Die Offenlegungsschrift DE 197 04 153 A1 betrifft ein Antriebssystem für ein Kraftfahrzeug, bei dem eine elektrische Maschine im Leerlaufbetrieb eines Verbrennungsmotors derart gesteuert wird, dass sie eine Änderung der Leerlaufdrehzahl des Verbrennungsmotors durch Aufbringen eines entsprechenden Drehmoments entgegenwirkt.

### Vorteile der Erfindung

Es wird ein Verfahren zum Betreiben eines Hybridfahrzeugs vorgeschlagen, bei dem wenigstens zwei Aggregate, von denen wenigstens eines ein Verbrennungsmotor ist, Drehmoment für einen Hybridfahrzeugantrieb bereitstellen, und bei dem ein benötigtes Gesamt-Reservedrehmoment ermittelt und Grenzen von aktuell verfügbaren Reservedrehmomenten jedes einzelnen Aggregats bestimmt werden. Es wird ein Drehzahlregler eingesetzt, der bevorzugt als konventioneller PID-Regler ausgeführt sein kann. Während beim konventionellen Fahrzeug die Summe aus Proportional-, Integral- und Differential-Anteil des Regelsignals durch den Verbrennungsmotor gestellt wird, können die unterschiedlichen Regleranteile beim Hybridfahrzeug auf Verbrennungsmotor und beispielsweise einen Elektromotor oder mehrere Elektromotoren verteilt werden. Eine mögliche Aufteilung sieht die Realisierung des Integral-Anteils beim Verbrennungsmotor und eine Aufteilung der Reglergesamtverstärkung (Gesamt-Proportional- und/oder eventuell Gesamt-Differential-Anteil) z.B. auf Anteile beim Verbrennungsmotor und beim Elektromotor vor. Dabei werden bei der Aufteilung vorzugsweise mögliche Beschränkungen in den Stellgrößen der Aggregate berücksichtigt. So können vorteilhaft Probleme bei der Bereitstellung des Drehmoments vermieden werden. So kann zum Beispiel ein Ottomotor zwar schnelle momentenreduzierende Stellwünsche durch entsprechende Zündwinkeleingriffe problemlos realisieren, schnelle momentenerhöhende Stellwünsche können dagegen nur realisiert werden, wenn rechtzeitig vorher ein entsprechender Momentenvorhalt durch Erhöhung der Luftfüllung bei gleichzeitiger Zündwinkelverstellung durchgeführt wurde. Analog verhält es sich mit Elektromotoren, wenn beispielsweise eine Batterie als elektrischer Speicher kurzfristig nicht ausreichend Energie zur Verfügung stellen bzw. aufnehmen kann oder entsprechende Maximal- oder Minimalmomente bereits ausgereizt sind.

Bevorzugt wird von einem globalen Drehzahlkoordinator ein benötigtes Gesamt-Reservemoment ermittelt, welches innerhalb kürzester Zeit abgerufen und somit im Bedarfsfall in Summe durch den Proportional-Anteil bzw. Differential-Anteil des Verbrennungsmotors und den Proportional-Anteil bzw. Differential-Anteil des Elektromotors (bzw. der Elektromotoren) schnell gestellt werden kann.

Parallel dazu können für alle beteiligten Aggregate Grenzen der aktuell möglichen Reservedrehmomente errechnet werden. Insbesondere für den elektrischen Antrieb wird dabei erfindungsgemäß das Maximal- bzw. Minimaldrehmoment des Elektromotors sowie Begrenzungen wie z. B. durch elektrische Speicher berücksichtigt. Beim Verbrennungsmotor wird erfindungsgemäß ein Reservedrehmoment durch Erhöhung der Luftfüllung bei gleichzeitiger Zündwinkelspätverstellung erreicht. Die Momentenreduktion mittels Zündwinkelspätverstellung ist durch die Brennbarkeitsgrenze des im Verbrennungsmotor verbrannten Kraftstoffs limitiert. Dadurch ergibt sich eine Grenze für das aktuell mögliche Reservedrehmoment des Verbrennungsmotors.

Anschließend wird erfindungsgemäß auf Basis dieser Information eine gewünschte Verteilung des Gesamt-Reservedrehmoments auf die Aggregate vorgenommen und die Aggregate entsprechend angesteuert. Parallel dazu wird erfindungsgemäß die Gesamt-Proportional-Verstärkung bzw. die Gesamt-Differential-Verstärkung auf Verbrennungsmotor und Elektromotor(en) aufgeteilt, und zwar entsprechend der Verteilung des Gesamt-Reserveredrehmoments. Wird also z.B. das Gesamt-Reservemoment zu 100% durch den Verbrennungsmotor gestellt, weil der Elektromotor keine Reserve aufbauen kann, so soll auch die Gesamt-Proportional-Verstärkung bzw. die Gesamt-Differential-Verstärkung ausschließlich durch den Verbrennungsmotor gestellt werden und umgekehrt. Für Aufteilungen zwischen den beschriebenen Extremwerten kann zweckmäßigerweise entsprechend interpoliert werden.

Eine stabile Regelung kann durch Verfügbarkeit schneller Stelleingriffe in der Summe aller beteiligten Aggregate erreicht werden. Durch Ausnutzen der Reserven der elektrischen Maschine bietet sich die Möglichkeit der Reduzierung von wirkungsgradsenkenden Zündwinkeleingriffen beim Ottomotor.

Ein besonderer Vorteil des beschriebenen Verfahrens liegt in der möglichen Optimierung zur Vermeidung von Reservemomenten des Verbrennungsmotors, die stets mit Wirkungsgrad- und Verbrauchsverschlechterung gekoppelt sind. Dazu wird zunächst das Reserve potential der elektrischen Maschine ausgeschöpft und das Gesamt-Reservedrehmoment sowie die entsprechende Gesamt-Proportional-Verstärkung bzw. die Gesamt-Differential-Verstärkung soweit möglich mit der elektrischen Maschine realisiert. In diesem Fall wäre kein Reservemoment durch den Verbrennungsmotor und somit kein Zündwinkeleingriff erforderlich. Nur wenn der Stellbereich des elektrischen Antriebs erschöpft ist, wird der Verbrennungsmotor hinzugezogen, um die Stabilität des Regelkreises bzw. die Regelgüte durch die Verfügbarkeit schneller Eingriffe sicherzustellen.

Bevorzugt wird zunächst ein Reservedrehmoment eines oder mehrerer Aggregats/Aggregate ausgeschöpft, welches kein Verbrennungsmotor ist/sind und die entsprechende Gesamtverstärkung weitestgehend mit diesem/diesen Aggregaten realisiert. Bei Erschöpfung eines Stellbereichs des/der Aggregats/Aggregate kann der Verbrennungsmotor hinzugezogen werden.

### Zeichnungen

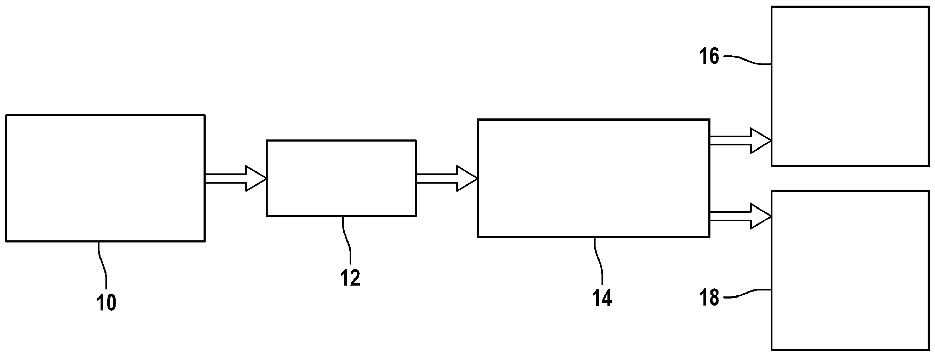

Die Erfindung wird nachfolgend in einem Ausführungsbeispiel anhand der zugehörigen Zeichnung näher erläutert. Die einzige Figur zeigt einen bevorzugten Verfahrensablauf.

### Beschreibung des Ausführungsbeispiels

In der Figur ist ein Ablaufschema des erfindungsgemäßen Verfahrens in einem bevorzugten, nicht zeichnerisch ausgeführten Hybridfahrzeug mit einem Verbrennungsmotor und einem Elektromotor als Aggregate im Fahrzeugantrieb dargestellt. Beide Aggregate stellen Drehmoment für einen Hybridfahrzeugantrieb bereit. Dies kann zeitweise gleichzeitig erfolgen, oder es kann jeweils eines der Aggregate zeitweise alleine das geforderte Drehmoment liefern.

In einem ersten Verfahrensschritt 10 werden ein benötigtes Gesamt-Reservedrehmoment und eine Regler-Gesamtverstärkung eines Drehzahlreglers bestimmt. Das Verfahren läuft vorzugsweise in einem erfindungsgemäßen Steuergerät ab. Das Gesamt-Reservedrehmoment kann z.B. aufgrund einer Fahreranforderung, einer Zuschaltung eines Verbrauchers, wie z.B. einer Klimaanlage, oder auch in Abhängigkeit von der aktuellen Drehzahl bestimmt werden.

Die Reglergesamtverstärkung umfasst einen Proportionalanteil (P-Anteil) und gegebenenfalls einen Differentialanteil (D-Anteil). Wird als Drehzahlregler ein PID-Regler eingesetzt, kann der Integralanteil (I-Anteil) vorzugsweise am Verbrennungsmotor realisiert werden.

Anschließend erfolgt in einem zweiten Verfahrensschritt 12 die Berechung der Grenzen der möglichen Drehmomentreserven aller verfügbaren Aggregate, hier also beispielhaft des Verbrennungsmotors und des Elektromotors. Dabei werden Beschränkungen der Stellgrößen der Aggregate mit einbezogen.

In einem weiteren Verfahrensschritt 14 werden eine Aufteilung des Gesamt-Reservedrehmoments und eine Verteilung der Reglergesamtverstärkung auf die Aggregate vorgenommen

Anschließend wird in den vorzugsweise parallelen Verfahrensschritten 16 und 18 der Verbrennungsmotor mit seinem Anteil an der Gesamt-Drehmomentreserve und der Elektromotor mit seinem Anteil an der Gesamt-Drehmomentreserve mit den jeweiligen P-Anteilen und/oder D-Anteilen der Gesamtverstärkung im Bereich von 0%-100% beaufschlagt.

Dabei wird zunächst ein Reservedrehmoment des Elektromotors ausgeschöpft und die entsprechende Gesamtverstärkung weitestgehend mit diesem Aggregat realisiert. Bei Erschöpfung des Stellbereichs des Aggregats wird der Verbrennungsmotor hinzugezogen.

## Patentansprüche

1. Verfahren zum Betreiben eines Hybridfahrzeugs, bei dem wenigstens zwei Aggregate, von denen wenigstens eines ein Verbrennungsmotor ist, Drehmoment für einen Hybridfahrzeugantrieb bereitstellen, wobei ein benötigtes Gesamt-Reservedrehmoment ermittelt und Grenzen von aktuell verfügbaren Reservedrehmomenten jedes einzelnen Aggregats bestimmt werden, wobei bei dem Verbrennungsmotor ein durch Erhöhung seiner Luftfüllung bei gleichzeitiger Zündwinkelverstellung erreichbares Reservedrehmoment unter Berücksichtigung einer Brennbarkeitsgrenze seines Kraftstoffs bestimmt und bei mindestens einem Elektromotor als ein weiteres der Aggregate als Grenze ein Maximaldrehmoment und/oder ein Minimaldrehmoment und/oder ein Ladezustands eines Energiespeichers, der den Elektromotor mit Antriebsleistung versorgt, herangezogen wird, und wobei abhängig von den Grenzen der aktuell verfügbaren Reservedrehmomente eine Aufteilung des Gesamt-Reservedrehmoments auf die einzelnen Aggregate innerhalb der bestimmten Grenzen erfolgt, wobei eine Gesamtverstärkung eines Drehzahlreglers bestimmt wird mit einem Gesamt-Proportional-Anteil und/oder einem Gesamt-Differential-Anteil, welche(r) entsprechend der Aufteilung des Gesamt-Reserve-Drehmoments auf die Aggregate verteilt wird.

2. Verfahren nach Anspruch 1, **dadurch gekennzeichnet, dass** zunächst ein Reservedrehmoment eines oder mehrerer Aggregats/Aggregate ausgeschöpft wird, welche(s) kein Verbrennungsmotor ist/sind.

3. Verfahren nach Anspruch 2, **dadurch gekennzeichnet, dass** die entsprechende Gesamtverstärkung weitestgehend mit diesem/diesen Aggregat(en) realisiert wird.

4. Verfahren nach Anspruch 2 oder 3, **dadurch gekennzeichnet, dass** bei Erschöpfung eines Stellbereichs des/der Aggregats/Aggregate der Verbrennungsmotor hinzugezogen wird.

5. Steuergerät zur Durchführung des Verfahrens nach einem der vorhergehenden Ansprüche, wobei ein benötigtes Gesamt-Reservedrehmoment ermittelbar und Grenzen von aktuell verfügbaren Reservedrehmomenten jedes einzelnen Aggregats bestimmbar sind, wobei bei dem Verbrennungsmotor ein durch Erhöhung seiner Luftfüllung bei gleichzeitiger Zündwinkelverstellung erreichbares Reservedrehmoment unter Berücksichtigung einer Brennbarkeitsgrenze seines Kraftstoffs bestimmt, und bei mindestens einem Elektromotor als ein weiteres der Aggregate als Grenze ein Maximaldrehmoment und/oder ein Minimaldrehmoment und/oder ein Ladezustands eines Energiespeichers, der den Elektromotor mit Antriebsleistung versorgt, herangezogen wird, und wobei abhängig von den Grenzen der aktuell verfügbaren Reservedrehmomente das Gesamt-Reservedrehmoment auf die einzelnen Aggregate innerhalb der bestimmten Grenzen aufteilbar ist, wobei eine Gesamtverstärkung eines Drehzahlreglers bestimmt wird mit einem Gesamt-Proportional-Anteil und/oder einem Gesamt-Differential-Anteil, welche(r) entsprechend der Aufteilung des Gesamt-Reserve-Drehmoments auf die Aggregate verteilt wird.

## Claims

1. Method for operating a hybrid vehicle, in which at least two assemblies, at least one of which is an internal combustion engine, make available torque for a hybrid vehicle drive, wherein a total reserve torque which is required is detected and limits of currently available reserve torques of each individual assembly are determined, wherein at the internal combustion engine a reserve torque which can be achieved by increasing its air charge with simultaneous adjustment of the ignition angle is determined taking into account a combustibility limit of its fuel, and at at least one electric motor as a further assembly a maximum torque and/or a minimum torque and/or a state of charge of an energy store which supplies the electric motor with drive power is used as a limit, and wherein the total reserve torque is apportioned between the individual assemblies within the determined limits as a function of the limits of the currently available reserve torques, wherein a total gain of a rotational speed regulator is determined with a total proportional component and/or a total differential component which are/is apportioned between the assemblies in accordance with the apportioning of the total reserve torque.

2. Method according to Claim 1, **characterized in that** firstly a reserve torque of one or more assemblies, which is/are not internal combustion engines, is exhausted.

3. Method according to Claim 2, **characterized in that** the corresponding total gain is implemented largely with this assembly/these assemblies.

4. Method according to Claim 2 or 3, **characterized in that** when an actuation range of the assembly/assemblies is exhausted the internal combustion engine is additionally used.

5. Control unit for carrying out the method according to one of the preceding claims, wherein a total reserve torque which is required can be detected and limits of currently available reserve torques of each individual assembly can be determined, wherein at the internal combustion engine a reserve torque which can be achieved by increasing its air charge with simultaneous adjustment of the ignition angle is determined taking into account a combustibility limit of its fuel, and at at least one electric motor as a further assembly a maximum torque and/or a minimum torque and/or a state of charge of an energy store which supplies the electric motor with drive power is used as a limit, and wherein the total reserve torque can be apportioned between the individual assemblies within the determined limits as a function of the limits of the currently available reserve torques, wherein a total gain of a rotational speed regulator is determined with a total proportional component and/or a total differential component which is/are apportioned between the assemblies in accordance with the apportioning of the total reserve torque.

## Revendications

1. Procédé de conduite d'un véhicule hybride dans lequel
au moins deux machines dont au moins l'une est un moteur à combustion interne appliquent un couple de rotation sur un entraînement du véhicule hybride, un couple global de rotation de réserve nécessaire étant déterminé et les limites des couples de rotation de réserve disponibles à tout moment en provenance de chacune des différentes machines sont déterminées,
un couple de rotation de réserve qui peut être appliqué par le moteur à combustion interne par augmentation de son remplissage d'air tout en ajustant l'angle d'allumage étant déterminé en tenant compte de la limite d'inflammabilité de son carburant et
le couple de rotation maximum, le couple de rotation minimum et/ou l'état de charge d'une réserve d'énergie qui alimente le moteur électrique en énergie d'entraînement intervenant comme limite pour le ou les moteurs électriques servant d'autres machines,
une répartition du couple global de rotation de réserve a lieu entre les différentes machines à l'intérieur des limites définies en fonction des limites des couples de rotation de réserve disponibles à tout instant,
l'amplification globale d'un régulateur de vitesse de rotation étant déterminée avec une partie proportionnelle globale et/ou une partie différentielle globale qui sont réparties entre les machines en fonction de la répartition du couple global de rotation de réserve.

2. Procédé selon la revendication 1, **caractérisé en ce que** le couple de rotation de réserve d'une ou plusieurs machines qui ne sont pas des moteurs à combustion interne est d'abord appliqué.

3. Procédé selon la revendication 2, **caractérisé en ce que** l'amplification globale appropriée est réalisée très largement avec cette ou ces machines.

4. Procédé selon les revendications 2 ou 3, **caractérisé en ce que** le moteur à combustion interne intervient dans l'application d'une plage de réglage par la ou des machines.

5. Appareil de commande permettant de mettre en oeuvre le procédé selon l'une des revendications précédentes, dans lequel
le couple de rotation de réserve global nécessaire peut être déterminé et les limites des couples de rotation de réserve disponibles à tout moment en provenance de chacune des différentes machines sont déterminées,
le couple de rotation de réserve qui peut être appliqué par le moteur à combustion interne par augmentation de son remplissage d'air tout en ajustant l'angle d'allumage étant déterminé en tenant compte de la limite d'inflammabilité de son carburant et
le couple de rotation maximum, le couple de rotation minimum et/ou l'état de charge d'une réserve d'énergie qui alimente le moteur électrique en énergie d'entraînement intervenant comme limite pour le ou les moteurs électriques servant d'autres machines,
une répartition du couple global de rotation de réserve a lieu entre les différentes machines à l'intérieur des limites définies en fonction des limites des couples de rotation de réserve disponibles à tout instant,
l'amplification globale d'un régulateur de vitesse de rotation étant déterminée avec une partie proportionnelle globale et/ou une partie différentielle globale qui sont réparties entre les machines en fonction de la répartition du couple global de rotation de réserve.
